Europäisches Patentamt

European Patent Office

Office européen des brevets

(11) Publication number: **0 183 069**
**B1**

# EUROPEAN PATENT SPECIFICATION

(45) Date of publication of patent specification: **12.04.89**

(51) Int. Cl.⁴: **G 21 C 7/26,** G 21 C 7/10

(21) Application number: **85113719.0**

(22) Date of filing: **29.10.85**

(54) Water displacer rod for use in a spectral shift nuclear reactor.

(30) Priority: **13.11.84 US 670853**

(43) Date of publication of application:
**04.06.86 Bulletin 86/23**

(45) Publication of the grant of the patent:
**12.04.89 Bulletin 89/15**

(84) Designated Contracting States:
**BE DE FR GB IT SE**

(56) References cited:
**US-A-2 852 456**
**US-A-4 432 934**

(73) Proprietor: **WESTINGHOUSE ELECTRIC CORPORATION**
**Westinghouse Building Gateway Center**
**Pittsburgh Pennsylvania 15222 (US)**

(72) Inventor: **Wilson, John Francis**
**3560 Meadowgate Drive**
**Murrysville Pennsylvania 15668 (US)**
Inventor: **Gjertsen, Robert Kenneth**
**126 Penn Lear Drive**
**Monroeville Pennsylvania 15146 (US)**
Inventor: **Cerni, Samuel**
**101 Kingsdale Road**
**Pittsburgh Pennsylvania 15221 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

**Description**

The present invention relates to an improved water displacer rod for use in a mechanical spectral shift nuclear reactor.

It is known practice to design into the reactor core of a pressurized water reactor an excess of reactivity at start-up so as to extend the useful life of the core. This excess reactivity must be properly controlled, of course, and one known technique of controlling it is to produce an initial spectral shift having the effect of increasing the epithermal (low reactivity) part of the neutron spectrum at the expense of the thermal (high reactivity) part, which results in production of fewer thermal neutrons and decreased fission, and then, as fission decreases during extended reactor operation, to effect a reverse shift back to the thermal part of the neutron spectrum at the expense of the epithermal part.

This control technique is primarily accomplished through the use of moderator displacer rods. As the name implies, these rods are placed in the core to initially displace some of the moderator water therein and thereby decrease the reactivity. Then, at some point during the core cycle and as reactivity is consumed, the moderator displacement associated with these rods is removed from the core so that the amount of moderation and thus the level of reactivity in the core are increased.

Several constructions of water displacer rods are disclosed in US—A—4,432,934, one of which displacer rods includes an upper tube composed of stainless steel, for instance, and a lower tube composed of Zircaloy-4, for example, the two tubes being interconnected through an intermediate extension in the form of a rod of solid Zircaloy-4. The upper tube is sealed at its upper end by an end plug capable of being threadably attached to a spider, while the lower tube is sealed at its lower end by an end plug which may be bullet-shaped to aid in inserting the rod into a guide thimble within one of the fuel assemblies of the reactor. In one construction of this displacer rod, the lower tube is thin-walled and contains a stack of annular pellets extending from the bottom end plug to the intermediate rod extension which provides structural support for the tube to prevent its collapse under reactor operating pressure. In the alternative, the pellets can be of a solid instead of a hollow construction. As another alternative construction, the lower tube can be thick-walled and pressurized with an inert gas to prevent collapse of the rod under reactor pressure. In still another construction, the displacer rod contains a spring instead of the stack of pellets. In any event, the displacer rod is constructed as a low neutron absorbing rod capable of displacing reactor coolant-moderator when inserted into a fuel assembly.

While all of these conventional water displacer rods perform well under the particular range of operating conditions for which they were designed, a need exists for improvement in the design of displacer rods to increase their general utility in fuel assemblies even in a variety of slightly deformed structural states.

It is the principal object of the invention to provide an improved water displacer rod designed to satisfy this need, and the invention accordingly resides in a water displacer rod comprising an elongate, hollow, hermetically sealed tubular member, and a plurality of pellets stacked end-on-end within the tubular member, each of at least a majority of said pellets having a substantially cylindrical body which is hollow and defines an inner void, and the inner void of each pellet being enclosed and separated from the inner voids of adjacent pellets in the stack.

The design activity leading up to the improved water displacer rod of the invention brought to light certain important considerations. First, the rod should be flexible enough to permit axial movement thereof even in a fuel assembly having structure which has become somewhat deformed axially, such as warped or bowed. Second, the amount of neutron-moderating coolant flow needed to remove heat from the rod should be kept to a minimum. Third, in order to more precisely calculate nuclear peaking factors in the core, it must be possible to assume that there is no coolant in any of the rods.

Each of the three above-mentioned considerations underlie, and are satisfactorily addressed by, the water displacer rod of the invention. As will be explained hereinafter, the problems of providing adequate rod flexibility and collapse resistance, of minimizing the need for increased coolant flow to avoid rod overheating, and of minimizing nuclear peaking in adjacent fuel rods are all treated in a satisfactory manner.

First, flexibility of the rod can be increased through reduction in the moment of inertia of the rod. The most practical way of minimizing rod inertia is to use a thin-walled cladding or tube in the rod. The use of a thin-walled tube, in turn, requires the provision of some means within it to prevent collapse of the tube due to external pressure. A stack of pellets therein will increase the strength of the tube without adversely affecting its flexibility, whereas the use of another inner thin tube would increase the collapse resistance of the outer tube but would reduce its flexibility.

Second, in order to minimize the amount of coolant flow required to remove heat from the rod and to prevent surface boiling due to gamma heating, the mass of the pellets selected to satisfy the first consideration — flexibility and collapse resistance — must be minimized. The use of hollow or annular pellets is a practical way of minimizing the mass of the pellets without deleteriously affecting the flexibility and collapse resistance of the tube.

Third, without some additional steps being taken, the use of a thin-walled tube increases the probability of clad failure and consequential entry of coolant into the displacer rod, and the use of hollow annular pellets compounds the problem further in that the latter enable the coolant to flow throughout the empty spaces in the rod, thereby substantially increasing peaking factors.

The invention providing for the center or inner void of each pellet to be individually sealed renders substantially all of the empty space within the tube impenetrable to coolant even if the thin-walled tube of the displacer rod should fail. Furthermore, end webs provided in the pellets with inner voids to seal the latter lend radial support at axially spaced locations along the displacer rod, thereby enhancing the collapse resistance of the rod without adversely affecting its flexibility or significantly increasing its overall mass.

Preferred embodiments of the invention will now be described, by way of example only, with reference to the accompanying drawings, in which:-

Fig. 1 is a fragmentary view of a reactor core depicting, in elevation, portions of several fuel assemblies shown in vertically foreshortened form, an upper core support plate, and a spider assembly above the core plate;

Fig. 2 is an enlarged, vertically foreshortened and partly sectional view of a water displacer rods embodying the invention;

Fig. 3 is a sectional view of the displacer rod taken along line 3--3 of Fig. 2;

Fig. 4 is a longitudinal cross-sectional view of one of the pellets contained in the thin-walled tube of the water displacer rod of Fig. 2;

Fig. 5 is a sectional view taken along line 5--5 of Fig. 4;

Fig. 6 is a view similar to Fig. 4 but showing the pellet before attachment of the end cap to the pellet body; and,

Figs. 7 to 11 are alternative forms of pellets suitable for use in a displacer rod according to the invention.

In the following description, like reference characters designate like or corresponding parts throughout the several views of the drawings, and terms such as "forward", "rearward", "left", "right", "upwardly", "downwardly", and the like, are employed as words of convenience not to be construed as limiting terms.

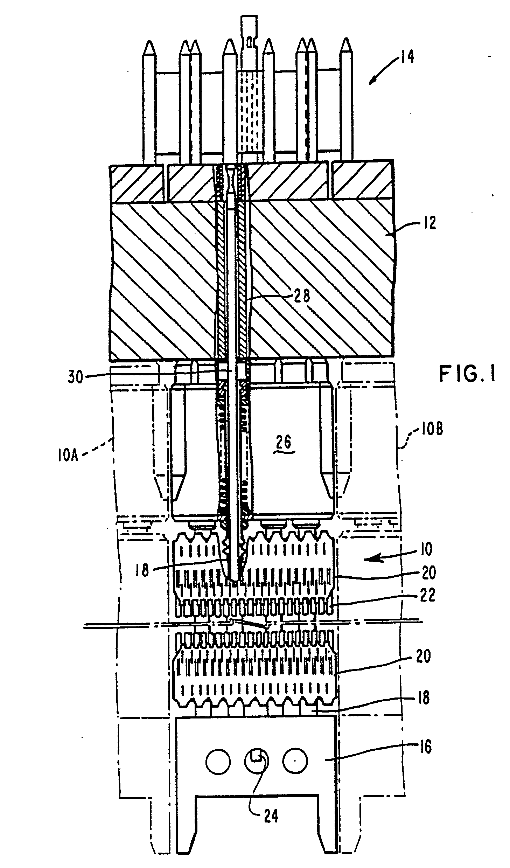

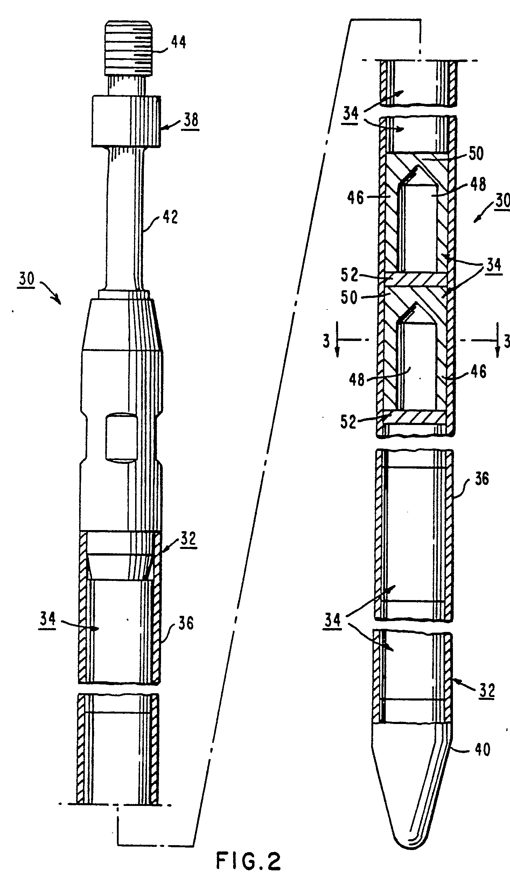

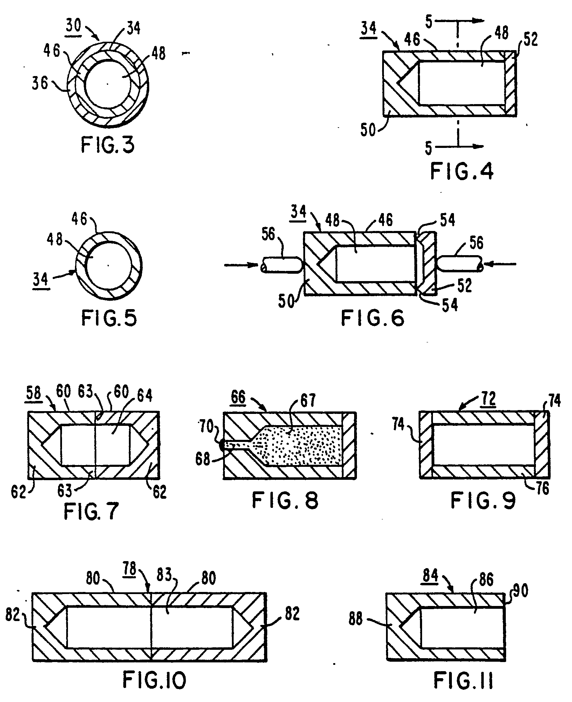

Referring now to the drawings, and particularly to Fig. 1, there are shown several fuel assemblies 10, 10A and 10B together with an upper core support plate 12 disposed above and extending across the fuel assemblies, and a spider assembly 14 disposed above the support plate 12.

Briefly, describing the fuel assembly 10 as representative of all fuel assemblies of the core, including the assemblies 10A and 10B, it basically comprises a lower end structure or bottom nozzle 16 supporting the assembly on a lower core plate (not shown), a plurality of guide thimbles 18 projecting longitudinally upward from the bottom nozzle 16, a plurality of transverse grids 20 spaced axially along the guide thimbles 18, an organized array of elongate fuel rods 22 transversely spaced and supported by the grids 20, an instrumentation tube 24 located in the center of the fuel assembly, and an upper end structure or top nozzle 26 attached to the upper ends of the guide thimbles 18. With such an arrangement of parts, the fuel assembly 10 forms an integral unit capable of being conveniently handled without damaging the assembly parts.

Each of the fuel rods 22 contains nuclear fuel pellets (not shown) and has its opposite ends closed by means of end plugs (not shown), the fuel pellets being composed of fissile material and representing the source of the reactive power generated in the reactor. A liquid moderator/coolant, such as water or water containing boron, is pumped upwardly through the fuel assemblies of the core in order to extract heat therefrom for the purpose of producing useful work.

The upper core support plate 12 which extends across the top of all the fuel assemblies within the core has a plurality of coolant flow openings, such as coolant flow opening 28, extending therethrough. At least some of these openings 28 are axially aligned with guide thimbles 18 to enable insertion of water displacer rods 30 (only one is shown in Fig. 1) through the openings 28 and into the guide thimbles 18 aligned therewith. The displacer rods 30 are connected to the spider assembly 14 which is operable, at selected times during operation of the reactor, so as to move the displacer rods down through the openings in the core plate 12 and into the respective guide thimbles 18 from which they displace coolant.

As mentioned hereinbefore, water displacer rods are initially inserted in the reactor core for the purpose of displacing moderator/coolant and thereby decreasing the reactivity of the core. Then, at some later point during the core cycle as reactivity is consumed, the rods are removed from the core so as to increase the amount of moderation and, hence, the level of reactivity in the core.

In order that a displacer rod can serve its intended purpose satisfactorily, it should be a primary goal to design the rod such that it has a high probability of successfully withstanding the extreme pressures generated within the reactor core, which may reach 150 atmospheres for example. However, assuming that there might be occasions where a displacer rod specifically designed to withstand high external pressure will fail nevertheless, it should be a secondary goal to make provisions ensuring that in the event a displacer does rupture, little or none of the moderator/coolant water will be able to enter it. The improved water displacer rod 30 embodying the invention satisfies both of these design goals.

With particular reference to Fig. 2, the water displacer rod 30 embodying the invention basically includes an elongate hollow, hermetically sealed tubular member 32 and a stack of pellets 34 disposed therein. The tubular member 32 is formed by a thin-walled, metallic cladding or tube 36 having its opposite ends sealed by means of end plugs 38, 40. The upper end plug 38 has formed integral therewith an upwardly extending stem 42 with an externally threaded end portion 44 for connection of the rod to the spider assembly 14. The lower end plug 40 is conical. Preferably, the pellets 34, the tube 36, and the end plugs 38, 40 are all formed of Zircaloy material.

The hollow tube 36 is thin-walled so as to increase its lateral flexibility and thereby adapt the displacer rod better for insertion into fuel assemblies which are in a variety of structural conditions, such as fuel assemblies which have become warped or bowed due to extended use in the extreme environment found in a nuclear reactor core. The pellets 34 which fill the tube 36 between its end plugs 38, 40 increase its resistance to collapse under the high external pressure applied upon the tube 36 while in the reactor core.

At least a substantial proportion of the pellets 34 in each displacer rod 30 has the construction shown in Figs. 2-5, each pellet 34 having a cylindrical body 46 which fits coaxially within the tube 36 and is hollow, defining a central void 48. The use of hollow pellets minimizes the mass added to the weight of the rod 30 by the addition of the pellets. A pair of webs 50, 52 extending across the opposite ends of the pellet body 46 close and seal the void 48. The pellets 34 thus constructed perform two functions when stacked in the tube 36, viz. they increase the collapse resistance of the tube 36, and, in the event a breach in the tube should occur, they prevent the latter from becoming flooded with neutron moderating reactor coolant since the hollow pellets substantially occupy the tube volume and their inner voids 48 are sealed so that there is little or no empty space within the tube 36 for the reactor coolant to enter, even though the tube might have ruptured. Thus, a displacer rod embodying the invention presents in effect a double-barrier to the entry of moderating coolant into the displacer rod.

The body 46 and one end web 50 of the Zircaloy pellet 34 can be fabricated by drilling a central bore, forming void 48, into ground bar stock having the desired outside diameter. Then the other end web 52 in the form of a cap or disc could be stamped from Zircaloy sheet material and coined to form weld projections 54 (Fig. 6). The body 46 and cap 52 can then be resistance-welded together by using conventional techniques, such as by means of welding heads 56 used to apply force and electric current to both ends of the pellet 34. Other techniques could also be used to attach the cap 52 to the body 46.

The use of end webs 50, 52 permits the pellet 34 to have thinner walls yet be more resistant to external pressure than a purely annular or tubular pellet without solid ends lending radial support such as provided by the webs at each end of the pellet 34. In summary, the annular pellet body 46 having the inner void 48 and the end webs 50, 52 sealing it minimizes the mass of material in the displacer rod 30, reinforces the tube 36 against collapse, and assures that the rod 30 will not be flooded in the event of tube rupture.

Figs. 7-11 illustrate alternative forms of the pellet 34. In Fig. 7, a pellet 58 is composed of a pair of identical halves each of which includes a short body portion 60 and an integral web 62 formed at one end thereof. The two body portions 60 are welded together at their respective open ends 63 so as to seal the void 64 defined by the welded pellet halves.

Fig. 8 illustrates a pellet 66 substantially identical to the pellet 34 of Fig. 4, but having the added feature of its void 67 being prepressurized with an inert gas introduced through a passage 68 which then is sealed with a weld 70. Pressurization allows the pellet 66 to have an even thinner wall and still withstand the same level of external pressure as the pellet 34.

Fig. 9 shows a pellet 72 in which each of the webs is a cap or disc 74 similar to the cap 52 of the pellet 34. As in the case of cap 52, each cap 74 is attached to the respective end of the hollow body 76, such as by electric welding.

Fig. 10 illustrates a pellet 78, similar to but longer than the pellet 58 of Fig. 7. It is formed of two identical pieces each consisting of a hollow tubular body 80 with an end web 82 formed integral therewith, the two pieces being welded together at their respective open ends to define a sealed void 83.

Finally, Fig. 11 shows a pellet 84 which is substantially identical to pellet 34 without its end cap 52 but with an integral web 88 providing radial support. Although the inner void 86 of each individual pellet 84 is open at one end, stacking a plurality of pellets 84 end-to-end within a displacer rod 30 and with all pellets 84 oriented in the same way, the end web 88 of each pellet 84 will abut the open end 90 of the next pellet 84 in the stack and thus virtually seal its inner void 86.

**Claims**

1. A water displacer rod for use in a mechanical spectral shift nuclear reactor, comprising an elongate, hollow, hermetically sealed tubular member, and a plurality of pellets stacked end-on-end within the tubular member, characterized in that each (34; 58; 66; 72; 78; 84) of at least a majority of said pellets has a substantially cylindrical body (46; 60; 76; 80) which is hollow and defines an inner void (48; 64; 67; 83; 86), and that the inner void of each pellet is enclosed and separated from the inner voids of adjacent pellets in the stack.

2. A water displacer rod according to claim 1, characterized in that the pellets with inner voids have end webs (50, 52; 62; 74; 82; 88) which seal the inner voids of adjacent pellets in the stack from one another.

3. A water displacer rod according to claim 2, characterized in that at least some (34; 58; 66; 72; 78) of the pellets with inner voids therein each have two end webs (50; 52; 62; 74; 82) which seal the respective ends of the hollow cylindrical body of the pellet.

4. A water displacer rod according to claim 2 or 3, characterized in that at least some (34; 66) of the pellets with inner voids therein each have at one end thereof an end web (50) which is formed integral with the hollow cylindrical body (46) of the pellet, and have at the opposite end thereof an end web (52) which is formed as a cap sealingly joined to the hollow cylindrical body of the pellet.

5. A water displacer rod according to claim 4, characterized in that the hollow cylindrical body (46) with the integral web (50) at said one end thereof is a piece of bar having an axial bore formed therein from said other end and constituting the inner void (48; 67) of the pellet (34; 66).

6. A water displacer rod according to claim 2 or 3, characterized in that at least some (72) of the pellets with inner voids therein each have, at both ends thereof, end webs (74) which are formed as caps sealingly joined to the hollow cylindrical body (76) of the pellet.

7. A water displacer rod according to claim 6, characterized in that the hollow cylindrical body (76) of each pellet (72) having said caps at both ends thereof is a piece of tube.

8. A water displacer rod according to claim 2 or 3, characterized in that at least some (58; 80) of the pellets with inner voids therein each have at both ends thereof end webs (62; 82) which are formed integral with the hollow cylindrical body (60; 80) of the pellet.

9. A water displacer rod according to claim 8, characterized in that each pellet (58; 80) with integral ends webs (62; 82) at both ends thereof is formed of two pieces of bar each having an axial bore formed therein only from one end thereof and having said one end sealingly joined to the corresponding end of the other piece such that the axial bores of both pieces together form the inner void (64; 83) of the pellet.

10. A water displacer rod according to claim 2, characterized in that at least some (84) of the pellets with inner voids (86) therein each have at one end thereof an end web (88) which is formed integral with the hollow cylindrical body of the pellet, and have an opposite end (90) which is open, each pellet with an open end being oriented in the stack in a manner such that said open end abuts against and is closed by an end web of an adjacent pellet in the stack.

11. A water displacer rod according to claim 10, characterized in that each pellet (84) with an open end is formed of a piece of bar having an axial bore formed therein only from said opposite end of the pellet.

12. A water displacer rod according to any one of the preceding claims, characterized in that at least some (66) of the pellets with inner voids therein have said inner voids prepressurized.

**Patentansprüche**

1. Wasserverdrängerstab zum Gebrauch in einem mit mechanisch gesteuerter Spektralverschiebung arbeitenden Kernreaktor, mit einem langgestreckten, hohlen, gasdicht abgeschlossenen Rohr und einer Vielzahl von innerhalb des Rohres stirnseitig aneinanderliegend gestapelten Tabletten, dadurch gekennzeichnet, daß mindestens von einer Mehrzahl der Tabletten jede Tablette (34; 58; 66; 72; 78; 84) einen im wesentlichen zylindrischen Körper (46; 60; 76; 80) aufweist, der hohl ist und einen inneren Hohlraum (84; 64; 67; 83; 86) bildet, und daß der innere Hohlraum jeder Tablette abgeschlossen und von den inneren Hohlräumen angrenzender Tabletten des Stapels getrennt ist.

2. Wasserverdrängerstab nach Anspruch 1, dadurch gekennzeichnet, daß die Tabletten mit inneren Hohlräumen Stirnwände (50, 52; 62; 74; 82; 88) aufweisen, welche dieinneren Hohlräume benachbarter Tabletten in dem Stapel voneinander abschließen.

3. Wasserverdrängerstab nach Anspruch 2, dadurch gekennzeichnet, daß mindestens einige (34; 58; 66; 72; 78) der Tabletten mit inneren Hohlräumen jeweils zwei Stirnwände (50; 52; 62; 74; 82) aufweisen, welche die betreffenden Enden des hohlzylindrischen Tablettenkörpers abschließen.

4. Wasserverdrängerstab nach Anspruch 2 oder 3, dadurch gekennzeichnet, daß mindestens einige (34; 66) der Tabletten mit inneren Hohlräumen jeweils an einem Ende eine Stirnwand (50), die einstückig mit dem hohlzylindrischen Tablettenkörper (46) ausgebildet ist, und am anderen Ende eine weitere Stirnwand (52) aufweisen, die als dichtend mit dem hohlzylindrischen Tablettenkörper verbundener Deckel ausgebildet ist.

5. Wasserverdrängerstab nach Anspruch 4, dadurch gekennzeichnet, daß der hohlzylindrische Körper (46) mit der damit einteiligen Stirnwand (50) an seinem einen Ende als Stangenabschnitt mit einer von seinem einen Ende her eingebohrten Axialbohrung ausgebildet ist, welche den inneren Hohlraum (48; 67) der Tablette (34; 66) bildet.

6. Wasserverdrängerstab nach Anspruch 2 oder 3, dadurch gekennzeichnet, daß mindestens einige (72) der Tabletten mit inneren Hohlräumen an beiden Enden Stirnwände (74) aufweisen, die als mit dem hohlzylindrischen Tablettenkörper (76) dicht verbundene Deckel ausgebildet sind.

7. Wasserverdrängerstab nach Anspruch 6, dadurch gekennzeichnet, daß der hohlzylindrische Körper (76) jeder Tablette (72) mit an beiden Enden angeordneten Deckeln durch einen Rohrabschnitt gebildet ist.

8. Wasserverdrängerstab nach Anspruch 2 oder 3, dadurch gekennzeichnet, daß mindestens einige (58; 80) der Tabletten mit inneren Hohlräumen an beiden Enden Stirnwände (62; 82) aufweisen, die einteilig mit dem hohlzylindrischen Tablettenkörper (60; 80) ausgebildet ist.

9. Wasserverdrängerstab nach Anspruch 8, dadurch gekennzeichnet, daß jede Tablette (58; 80) mit einteilig ausgebildeten Stirnwänden (62; 82) an beiden Enden aus zwei Stangenabschnitten gebildet ist, die jeweils eine von einem Ende her eingebohrte Axialbohrung aufweisen und mit iesem Ende dichtend mit dem entsprechenden Ende des anderen Stangenabschnitts so verbunden sind, daß die beiden Axialbohrungen der beiden Stangenabschnitte zusammen den inneren Hohlraum (64; 83) der Tablette bilden.

10. Wasserverdrängerstab nach Anspruch 2, dadurch gekennzeichnet, daß mindestens einige (84) der Tabletten mit inneren Hohlräumen (86) an einem Ende eine Stirnwand (88) aufweisen, die einteilig mit dem hohlzylindrischen Tablettenkörper ausgebildet ist, und am anderen Ende (90) offen sind, wobei jede Tablette mit dem offenen Ende in dem Stapel so orientiert ist, daß das offene Ende durch die Stirnwand der angrenzenden Tablette im Stapel abgeschlossen ist.

11. Wasserverdrängerstab nach Anspruch 10, dadurch gekennzeichnet, daß jede Tablette (84) mit einem offenen Ende durch einen Stangenabschnitt mit nur von dem genannten anderen Tablettenende her eingebohrter Axialbohrung gebildet ist.

12. Wasserverdrängerstab nach einem der vorhergehenden Ansprüche, dadurch gekennzeichnet, daß bei mindestens einigen (66) der Tabletten mit inneren Hohlräumen diese inneren Hohlräume vordruckbeaufschlagt sind.

**Revendications**

1. Barre de déplacement d'eau pour un réacteur nucléaire à déplacement spectrale mécanique comprenant un élément tubulaire allongé, creux, hermétiquement fermé, et plusieurs pastilles empilées bout à bout à l'intérieur de l'élément tubulaire, caractérisée par le fait que chacune (34; 58; 66; 72; 78; 84) d'au moins la plupart desdites pastilles a un corps essentiellement cylindrique (46; 60; 76; 80) qui est creux et délimite un vide interne (48; 64; 67; 83; 86), et que le vide interne de chaque pastille est clos et séparé des vides internes des pastilles adjacentes dans la pile.

2. Barre de déplacement d'eau selon la revendication 1, caractérisée par le fait que les pastilles ayant les vides internes ont des flasques d'extrémité (50, 52; 62; 74; 82; 88) qui ferment de façon étanche les vides internes des pastilles adjacentes dans la pile les unes aux autres.

3. Barre de déplacement d'eau selon la revendication 2, caractérisée par le fait qu'au moins certaines (34; 58; 66; 72; 78) des pastilles ayant des vides internes ont chacune deux flasques d'extrémité (50; 52; 62; 74; 82) qui ferment de façon étanche les extrémités respectives du corps cylindrique creux de la pastille.

4. Barre de déplacement d'eau selon la revendication 2 ou 3, caractérisée par le fait qu'au moins certaines (34; 66) des pastilles ayant des vides internes ont chacune à une de leurs extrémités un flasque d'extrémité (5) qui fait partie intégrante du corps cylindrique creux (46) de la pastille, et ont à leur extrémité opposée un autre flasque d'extrémité (52) qui a la forme d'un couvercle hermétiquement assemblé au corps cylindrique creux de la pastille.

5. Barre de déplacement d'eau selon la revendication 4, caractérisée par le fait que le corps cylindrique creux (46) avec un flasque intégré (50) à ladite extrémité de celui-ci est un tronçon de barre ayant un trou axial qui y est ménagé à partir de ladite autre extrémité et constituant le vide interne (48; 67) de la pastille (34; 66).

6. Barre de déplacement d'eau selon la revendication 2 ou 3, caractérisée par le fait qu'au moins certaines (72) des pastilles ayant des vides internes ont chacune, à leurs deux extrémités, des flasques d'extrémité (74) qui ont la forme de couvercles hermétiquement assemblés au corps creux (76) de la pastille.

7. Barre de déplacement d'eau selon la revendication 6, caractérisée par le fait que le corps cylindrique creux (76) de chaque pastille (72) ayant lesdits couvercles à ses deux extrémités est n tronçon de tube.

8. Barre de déplacement d'eau selon la revendication 2 ou 3, caractérisée par le fait qu'au moins certaines (58; 80) des pastilles ayant des vides internes ont chacune à leurs deux extrémités des flasques d'extrémité (62; 82) qui font partie intégrante du corps cylindrique creux (60; 80) de la pastille.

9. Barre de déplacement a eau selon la revendication 8, caractérisée par le fait que chaque pastille (58; 80) ayant des flasques d'extrémité intégrés (62; 82) à ses deux extrémités est constituée de deux tronçons de barre ayant chacun un trou axial qui y est ménagé seulement à partir d'une extrémité et ayant ladite extrémité hermétiquement assemblée à l'extrémité correspondante de l'autre tronçon de telle manière que les trous axiaux des deux tronçons ensemble forment le vide interne (64; 83) de la pastille.

10. Barre de déplacement d'eau selon la revendication 2, caractérisée par le fait qu'au moins certaines (84) des pastilles ayant des vides internes (86) ont chacun à l'une de leurs extrémités un flasque d'extrémité (88) qui forme partie intégrante du corps cylindrique creux de la pastille, et ont une extrémité opposée (90) qui est ouverte, chaque pastille ayant une extrémité ouverte étant orientée dans la pile de manière à ce que ladite extrémité ouverte bute contre et est fermée par un flasque d'extrémité d'une pastille adjacente dans la pile.

11. Barre de déplacement d'eau selon la revendication 10, caractérisée par le fait que chaque pastille (84) ayant une extrémité ouverte est constitué d'un tronçon de barre ayant un trou axial qui y est ménagé à partir de l'extrémité opposée de la pastille.

12. Barre de déplacement d'eau selon une quelconque des revendications précédentes, caractérisée par le fait qu'au moins certaines (66) des pastilles ayant des vides internes ont lesdits vides mis sous pression.

EP 0 183 069 B1

FIG.1

FIG.2

FIG.3

FIG.4

FIG.5

FIG.6

FIG.7

FIG.8

FIG.9

FIG.10

FIG.11